# EUROPEAN PATENT APPLICATION

(11) **EP 1 445 743 A1**
(43) Date of publication of application: **11.08.2004**
(21) Application number: 04090036.7
(22) Date of filing: 05.02.2004
(51) Int. Cl.: G07F 7/08, G07F 19/00

(54) **Electronic money system, electronic money exchange server and mobile phone**

(30) Priority: 07.02.2003 JP 2003031173
(71) Applicant: NEC CORPORATION, Tokyo (JP)
(72) Inventor: Nakamura, Keigo NEC Corporation, Tokyo (JP)
(74) Representative: Patentanwälte Wenzel & Kalkoff

(57) **Abstract**

Settlement processing with optional electronic money is to be enabled under circumstances where the sorts of the electronic money accepted by different settlement terminals are different. In case the electronic money "dollar" that can be used for settlement in a settlement terminal differs from the electronic money "yen" stored in an electronic money storage area of a mobile terminal (mobile phone) and hence settlement is not possible, the user of the mobile terminal accesses an electronic money exchange server, adapted for performing the processing of exchanging various sorts of the electronic money, over the network, to request the server to exchange electronic money "yen" in the electronic money storage area for electronic money "dollar". The electronic money exchange server accepts the request to perform the processing of exchanging electronic money "yen" with electronic money "dollar" in accordance with the preset exchange rate to update the electronic money storage area of the mobile terminal (mobile phone). After the exchange, the user of the mobile terminal (mobile phone) performs the settlement processing in the settlement terminal with the exchanged electronic money "dollar".

## Description

### FIELD OF THE INVENTION

This invention relates to an electronic money system, an electronic money exchange server and to a mobile terminal. More particularly, it relates to an electronic money system, an electronic money exchange server and to a mobile terminal in which settlement in an optional settlement terminal may be carried out by exchanging a sort of electronic money with another one on an electronic money exchange server on a network.

### BACKGROUND OF THE INVENTION

Recently, electronic settlement exploiting not the cash but the electronic money, also termed electronic currency, has come to be used as means for charge settlement in a network society. For example, the electronic money system exploiting a non-contact IC card has come to be practically used, such that, subject to advance designation of an account for payment and advance payment for a dedicated IC card, cashless payment may be made by simply placing the card over a dedicated settlement terminal provided in a fare gate in a railroad station or in a shopping mall.

An electronic money system, exploiting mobile phone§ has already been proposed. For example, an electronic money system has been put to practical use in which, for purchasing goods or services, the user demonstrates a bar code for authentication on a liquid crystal display of the mobile phone, and then a settlement terminal recognizes it by the bar code readout function.

In the field of mobile commerce in near future, the outstanding tendency is presumably towards mounting electronic money on the mobile phone. However, the current status is that electronic money available in the above-described conventional electronic money system is limited to specified settlement terminals. In addition, the current status of the art is that even the convertible sort of electronic money may be accepted by a given settlement terminal but may not be accepted by another. Thus, the user presumably has to visit a bank or a money changing firm in order to acquire the sort of the electronic money needed. Even if the standard of the electronic money, ubiquitously accepted in Japan, such as is introduced in JP Patent Kokai Publication No. JP-P2001-357332A, is established, and the mobile phone has come to be usable all over the world, the current status is that, at the global aspect, each country adopts the domestic currency, and hence electronic money usable in a given country may presumably be not so in another.

### [Patent Publication 1]

JP Patent Kokai Publication No. JP-P2001-357332A

### SUMMARY OF THE DISCLOSURE

In view of the above-depicted status of the art, it is an object of the invention to provide an electronic money system, an electronic money exchange server and to a mobile terminal in which payment can be made with a variety of sorts of electronic money via mobile terminals typified by the mobile phone.

For providing means for solving the above problem, the invention provides, in one aspect, an electronic money system comprising a settlement terminal for receiving and executing a request for settlement processing with at least one sort of electronic money, and a mobile terminal including electronic money storage means for storing and holding a plurality of various sorts of electronic money, in which the mobile terminal transmits a request for settlement processing with the electronic money in agreement with the settlement terminal. The system further comprises means for accepting an exchange rate inquiry processing from the mobile terminal to transmit an exchange rate between two or more sorts of electronic money, at least including the one sort of electronic money, to the mobile terminal, and means for updating, on accepting an exchange execute request including the information on the exchange amount with any one sort of electronic money before exchange or after exchange from the mobile terminal, the amount available of the various sorts of electronic money in the electronic money storage means of the mobile terminal, based on the exchange rate and on the exchange execute request.

In a second aspect, the invention provides an electronic money exchange server for exchange from one sort of electronic money to another in an electronic money system including a settlement terminal for receiving and executing a request for settlement processing with at least one sort of electronic money, and a mobile terminal including electronic money storage means for storing and holding a plurality of various sorts of electronic money, in which the mobile terminal transmits a request for settlement processing with the electronic money in agreement with the settlement terminal. The electronic money exchange server comprises means for transmitting an exchange rate between two or more sorts of electronic money, at least including the one sort of electronic money, to the mobile terminal, in case exchange rate inquiry processing is performed from the mobile terminal, and means for updating, on accepting an exchange execute request including the information on the exchange amount by one sort of electronic money before exchange or after exchange, from the mobile terminal, the amount available of the various sorts of electronic money in the electronic money storage means of the mobile terminal, based on the exchange rate and on the exchange execute request.

In a third aspect, the invention provides a mobile terminal in the above electronic money system wherein the exchange rate inquiry processing is carried out to each electronic money exchange server, and wherein the electronic money exchange server with the highest exchange rate is selected, the exchange execute request being transmitted to the electronic money exchange server selected.

### BRIEF DESCRIPTION OF THE DRAWINGS

Fig.1 shows a schematic structure of a system according to an embodiment of the invention.
Fig.2 is a sequence diagram showing the operation of the system of Fig. 1.
Fig.3 shows a schematic structure of a system according to another embodiment of the invention.
Fig.4 is a sequence diagram showing the operation of the system of Fig. 3.

### PREFERRED EMBODIMENTS OF THE INVEN TION

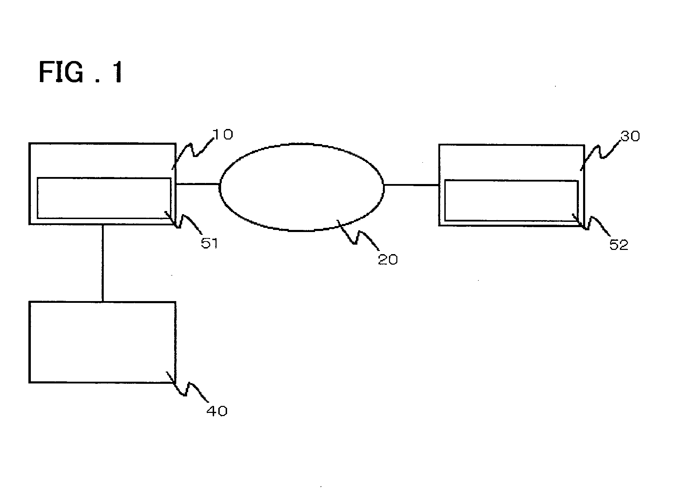

The schematics of an embodiment of Fig. 1 are hereinafter explained. First, such a case is explained in which a commodity or a ticket is purchased and settlement is made with electronic money stored and held in an electronic money storage area 51 of a mobile terminal 10, such as a mobile phone. It may be an occurrence that "yen" is stored as the electronic money in area 51 of terminal 10, while a settling terminal 40 is able to handle only "dollars". In this case, settlement cannot be made because the electronic money available for settlement in the settlement terminal 40 differs from the electronic money stored and held in the electronic money storage area 51. The user of the terminal 10 accesses an electronic money exchange server 30 to request exchange of the electronic money of "yen" of area 51 with electronic money of "dollar". The server 30 accepts this request and transmits the results of the exchange processing to mobile terminal 10 to re-write the electronic money storage area 51 to electronic money of "dollar" in accordance with a predetermined exchange rate. The mobile terminal 10 completes the processing of rewriting the electronic money storage area 51 based on the results of the exchange processing received. After exchanging electronic money in this manner, the user of the mobile terminal 10 connects it to the settlement terminal 40 to carry out the settlement processing. That is, the user of the mobile terminal 10 is able to exchange only the needed amount to finish the payment, whenever the necessity arises, without providing plural sorts of the electronic money at the outset.

It goes without saying that, by the electronic money exchange server 30 setting the exchange rate and the mode of storage and holding in the electronic money storage area 51 at the outset, the non-convertible electronic money proper to the network of settlement terminal 40 or the electronic money in terms of optional foreign currency other than the "dollar" may now be handled.

### Embodiments

Referring to the drawings, a first embodiment of the invention is now explained in still greater detail. Fig. 1 shows a system configuration in which the electronic money system of the invention is made up by a mobile phone 10, an electronic money exchange server 30, a network 20 interconnecting the mobile phone and the electronic money exchange server, and a settlement terminal 40 of arbitrary specifications.

The mobile phone 10 is a mobile telephone terminal, including an electronic money storage area 51 for storing and holding the amounts of various sorts of electronic money available, and is provided with a function of executing the procedure of settlement processing by electronic money by connecting to and communicating with the settlement terminal 40, and a function of connecting to the electronic money exchange server 30 over the network 20.

The electronic money storage area 51, removable from the mobile phone 10, for example, may be designed and constructed as a memory area for an SIM (Subscriber Identity Module) card, a UIM (User Identity Module) card, or a wide variety of standards of card type storage memories employing a flash memory.

Of course, if the above-mentioned removable medium is not used, such a method may also be used in which a memory area enclosed in a main body unit of the mobile telephone phone 10 or a memory area by a separate hardware unit, such as a built-in IC card, may be used by software as electronic money storage area 51.

In area 51, constructed as described above, the available amounts of electronic money are stored and held from one sort of electronic money to another.

The network 20 is used for the mobile phone 10 to access to server 30, such as the mobile phone network or the Internet.

The electronic money exchange server 30 includes the exchange rate information, not shown, for seeking the exchange rate between different sorts of electronic money handled for the mobile phone 10, and an electronic money storage area 52, and renders various services concerning the exchange of the electronic money to the mobile phone 10, as will be explained in detail subsequently. For communication with the mobile phone, an interface optionally selected from among an interface peculiar to each mobile phone manufacturer, an interface exploiting a mail message system, such as SMS (Short Messaging Service)/ EMS (Enhanced Messaging Service)/ MMS (Multimedia Messaging Service), and an interface exploiting the Java (registered trademark) mounted on the mobile phone, is used. Meanwhile, it is sufficient that the electronic money storage area 52 of server 30 is able to store and hold the amounts that can be used (exchanged), from one sort of electronic money to another. The detailed structure of the electronic money storage area is not stated herein for simplicity.

The exchange rate information is made up by a portion for fixing the basic exchange rate depending on the net value of each sort of electronic money as a subject of exchange, or on the supply/demand balance, and another portion for adjusting the presented exchange rate on a value basis or on a rate basis depending on the particular amount to be exchanged. Thus, the exchange rate offered to the user is variable depending on the exchange contents of electronic money.

The settlement terminal 40 is an information processing device, provided on e.g. a store, capable of accepting and executing a request from the mobile terminal device including the mobile phone (terminal) 10, for processing of electronic settlement of a particular sort of the electronic money. The connection to the mobile phone 10 is established by a system/method pre-selected from wireless communication means, such as non-contact IC, Bluetooth or infrared rays, and wired communication means, such as a USB (Universal Serial Bus) or a serial cable.

Meanwhile, there is no limitation to the procedure of the settlement processing between phone 10 and terminal 40, carried out using the identification number of the mobile phone 10 or the private information stored and held in the electronic money storage area 51, nor to the system/method for realization of security, such that any system desirable for the user may be used. Consequently, the system is not explained herein.

For more definite explanation of the operation and the effect of the embodiment, the operation of the electronic money system of the invention is explained with effective cases. One case is that the sort of electronic money available in the mobile phone 10 (amount available>0) is different from the sort of electronic money that can be handled by settlement terminal 40. Another case is that the available amount of the electronic money is in shortage such that settlement processing cannot be carried out as matters stand.

If a user of mobile phone 10, connecting to settlement terminal 40, accepting the settlement processing only by electronic money in terms of the foreign currency "dollar", executes settlement processing, and the mobile phone 10 owns the electronic money in terms of "yen" but does not own the electronic money in terms of the foreign currency "dollar" in its electronic money storage area 51, the settlement terminal 40 determines, as matters stand, that the amount of the electronic money in terms of the foreign currency "dollar" is zero or in shortage, so that the settlement processing cannot be performed.

Thus, in an attempt to exchange the electronic money in terms of "yen", stored and held in the electronic money storage area 51 of the mobile phone 10, for the electronic money in terms of the foreign currency "dollar", the user of the mobile phone 10 connects to exchange server 30 over network 20, in order to initiate the procedure of exchanging the electronic money, which is now explained.

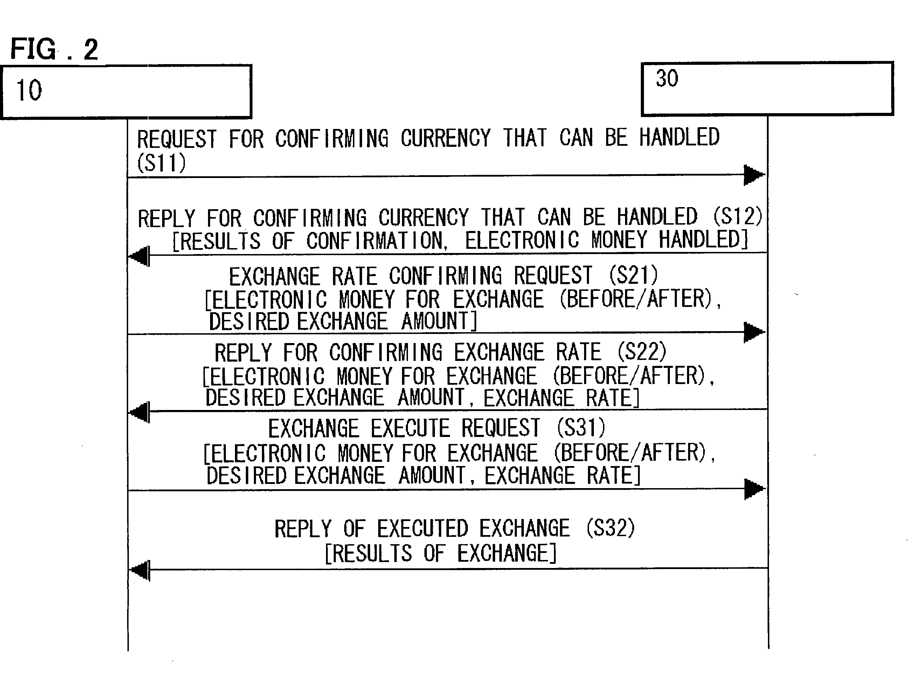

Fig.2 is a sequence diagram showing the contents of communication between mobile phone 10 and electronic money exchange server 30. Mobile phone 10 first sends a request for confirming the currency that can be handled S11 to the electronic money exchange server 30.

On receipt of the request for confirming the currency that can be handled S11, the server 30 returns the sort of electronic money that can be handled, that is, exchanged, as a reply for confirming the currency that can be handled S12. For example, if the server 30 is able to exchange the electronic money "yen", "dollar" and "euro", a reply of the result of confirmation = OK and the electronic money handled = "yen", "dollar" and "euro" is returned in the reply for confirming the currency that can be handled S12.

Of course, if mobile phone 10 connects to server 30 where the sorts of the electronic money that can be exchanged are known from the outset, the processing for confirming the sorts of the currency handled (S11, S12) is unnecessary.

When the reply for confirming the currency that can be handled S12 is affirmative, the user of phone 10 sends to server 30 an exchange rate confirming request S21 specifying the sorts of the electronic money before and after the exchange and the amount requested to be exchanged. For example, in order to exchange the electronic money in terms of "yen" for the electronic money in terms of the foreign currency "dollar", the user of phone 10 sends the sort of the electronic money prior to exchange, which is "yen", the sort of the electronic money after exchange, which is "dollar", and a request for confirming the exchange rate S21 for specifying the amount of exchange requested in terms of "yen" as the sort of the electronic money prior to exchange. The amount of exchange requested may be specified by the sort of the electronic money prior to exchange or posterior to exchange. For example, the amount of exchange requested may be specified in terms of the foreign currency "dollar" as needed in the settlement in the settlement terminal 40.

On receipt of the request for confirming the exchange rate S21, the electronic money exchange server 30 retrieves or calculates, from the exchange rate information, the exchange rate, which is in keeping with the two sorts of the electronic money and the amount of exchange requested, as specified in the request for confirming the exchange rate S21, to return the results of recognition = OK, the sorts of the electronic money before and after exchange, the amount of exchange, and the exchange rate, as a reply for confirming the exchange rate S22. If the request for confirming the exchange rate S21 has specified the sort of the electronic money which cannot be exchanged by server 30, or the exchangeable amount of the specified sort of the electronic money , stored and held in the electronic money storage area 52, is in shortage, and hence the exchange request cannot be complied with, the server 30 returns an error (ERROR) as a reply for confirming the exchange rate S22.

In case the mobile phone 10 agrees to the exchange rate indicated in the reply for confirming the exchange rate S22, phone 10 again specifies the sorts of the electronic money before and after exchange, the desired exchange amount , and the exchange rate, to server 30, or sends an exchange execute request S31, generated with the use optionally of the information contained in the reply for confirming the exchange rate S22, to server 30.

If, on receipt of the exchange execute request S31, the contents specified in the exchange execute request S31 is not rejective, the server 30 increases the available (exchangeable) amount of the sort of the electronic money to exchange (before exchange) in the storage area 52, in an amount corresponding to the amount specified in request S31, while subtracting the desired amount to be exchanged, as found by the exchange rate, from the available (exchangeable) amount of the sort of the electronic money to be exchanged, by way of executing the exchange processing, and sends a reply of the executed exchange S32 to phone 10. Meanwhile, if request S31 specifies the sort of the electronic money that cannot be exchanged by server 30, the exchange rate specified is in error, or if the available(exchangeable) amount of the specified sort of the electronic money stored and held in the electronic money storage area 52, is in shortage and hence the request for exchange cannot be complied with, the server 30 returns an error (ERROR) as the reply of the executed exchange S32.

On receipt of the reply of exchange S32, phone 10 subtracts the amount of the exchange request, specified in the reply of exchange S32, from the available amount of the specified sort of the electronic money in storage area 51, while increasing the available amount of the specified sort of electronic money, by an amount of the exchange request specified in the reply of the executed exchange S32.

When the above-described sequence of the exchange processing operations has come to a close, mobile phone 10 owns the electronic money in terms of the foreign currency "dollar", in addition to the electronic money in terms of "yen", in area 51, so that phone 10 may now be connected to the settlement terminal 40 to execute the settlement processing. That is, phone 10 is now able to exchange the electronic money it owns, during outing of the user, especially during the visit of the user to a foreign country, to use an optional settlement terminal 40.

In the above-described embodiments, the amount of the exchange request is included in the request for confirming the exchange rate S21, such that electronic money exchange server 30 is able to change the exchange rate with the amount of the exchange request, or to return an error (ERROR) in case the request for exchange cannot be complied with due to shortage of the available (exchangeable) amount of the electronic money stored in electronic money storage area 52. However, if there is no necessity for changing the exchange rate or server 30 complies with the exchange request without dependency on the available (exchangeable) amount, the amount of the exchange request does not have to be included in the request for confirming the exchange rate S21 nor in the reply for confirming the exchange rate S22.

Moreover, in the above-described embodiments, the exchange rate is included in the exchange execute request S31, so that, even if the exchange rate is changed after returning the reply for confirming the exchange rate S22, the exchange is executed at the exchange rate agreed to by the user of phone 10. Alternatively, the exchange processing may be carried out at the exchange rate when request S31 is received, without including the exchange rate returned with the reply for confirming exchange rate S22 in request S31. In this case, the exchange rate in the reply for confirming the exchange rate S22 is shown for user's reference and not used in the exchange.

In addition, in the above-described embodiments, electronic money in terms of "yen" is exchanged for electronic money in terms of "dollar". However, it goes without saying that the exchange may be made freely within the gamut of the sorts of the electronic money that can be exchanged by electronic money exchange server 30. In case of special circumstances, as when electronic money proper to the network of the settlement terminal 40 is not the popular currency or low in convertibility, it is possible for server 30 to set the exchange rate such as to take account of the special circumstances to enable useful circulation of these sorts of electronic money.

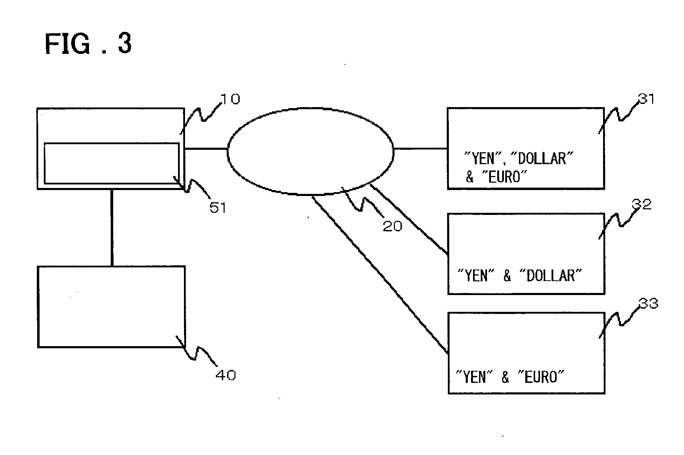

A second embodiment of the present invention is now explained in detail, with matter already explained in connection with the first embodiment bein omitted. Fig.3 shows a system configuration in which three electronic money exchange servers 31, 32 and 33 are connected to a network 20 of the present embodiment of the electronic money system.

The electronic money exchange server 31 stores and holds, in an electronic money storage area thereof, not shown, the available (exchangeable) amounts of the electronic money in terms of "yen", "dollar" and "euro", and is ready for corresponding exchange. In similar manner, the electronic money exchange server 32 is able to exchange the electronic money in terms of "yen" and "dollar", while it is able to exchange the electronic money in terms of "yen" and "euro".

Such a case is now explained in which, as in the above-described first embodiment, the electronic money in terms of "yen" is stored in the electronic money storage area 51 of the mobile phone 10, and its user exchanges this with electronic money in terms of "dollar".

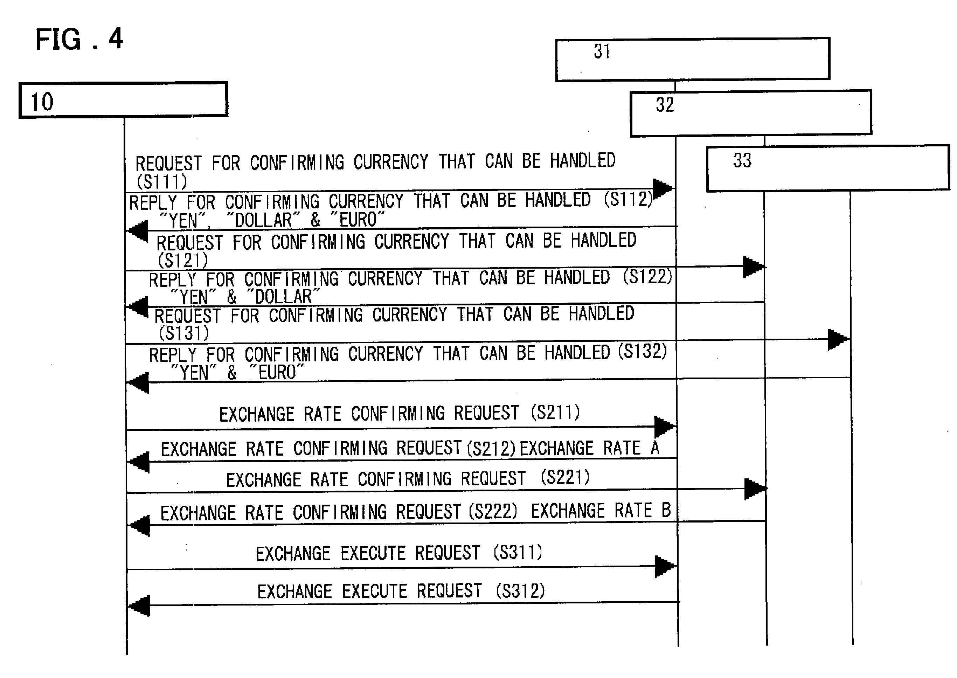

Fig.4 depicts a sequence diagram showing the contents of communication between the mobile phone 10 and the electronic money exchange servers 31, 32 and 33. Mobile phone 10 sends requests for confirming the currency that can be handled S111/ S121/ S131 to servers 31, 32 and 33, respectively.

On receipt of the requests for confirming the currency that can be handled S111/ S121/ S131, servers 31, 32 and 33 return the sorts of the electronic money that can be coped with by replies for confirming the currency that can be handled S112/ S122/ S132, respectively. Specifically, server 31 returns the electronic money in terms of "yen", "dollar" and "euro" as the sorts of exchangeable electronic money, while server 32 returns the electronic money in terms of "yen" and "dollar" as the sorts of exchangeable electronic money, and server 33 returns the electronic money in terms of "yen" and "euro" as the sorts of exchangeable electronic money.

Meanwhile, there is no necessity of performing the processing for confirming the currency handled in case phone 10 selects and connects to server 31, 32 or 33 with known sorts of exchangeable electronic money.

Continuing the explanation further, server 33 is not handling the sort of electronic money "dollar" to be exchanged for, and hence it is sufficient to prosecute the subsequent exchange rate confirming processing and the exchange execute processing solely for servers 31, 32. Of course, if mobile phone 10 sends requests for confirming the currency "dollar" that can be handled and the reply for confirming the currency that can be handled S132 from server 33 is the results of confirmation = error (ERROR) and the sorts of exchangeable electronic money being "yen" and "euro", it is sufficient to prosecute the subsequent exchange rate confirming processing and the exchange execute processing solely for servers 31, 32.

The mobile phone 10 sends requests for confirming the exchange rate S211/ S221, specifying the sort of the electronic money to exchange (before exchange), which is "yen", and the sort of the electronic money desired by exchange (after exchange), which is "dollar", to servers 31 and 32.

Responsive to the request for confirming the exchange rate S211, server 31 returns a reply for confirming the exchange rate S212, which is the exchange rate A (for example, one dollar = 120 yen), to phone 10. In similar manner, server 32 returns a reply for confirming the exchange rate S222, which is the exchange rate B (one dollar = 125 yen).

The mobile phone 10 confirms the replies for confirming the exchange rate S221/ S222 and selects the electronic money exchange server with the higher exchange rate, that is, the electronic money exchange server from which electronic money desired by exchange may be obtained with the smaller amount of the electronic money to exchange, in order to execute the exchange processing. For example, in the above case, more electronic money in terms of "dollar" may be obtained with the amount of the electronic money in terms of "yen" which is smaller with the exchange rate A than with the exchange rate B. Thus, phone 10 sends a request for exchange execution S311 to server 31. Solely server 31 which has received the request for exchange execution S311 executes the exchange processing similar to that in the above-described first embodiment.

Meanwhile, the selection of server 31 having the above optimum exchange rate may be performed by no other than the user of mobile phone 10 as s/he refers to the display picture on phone 10. However, as a modification, the above respective processing operations may be automated by installing a program for carrying out the above sequence of operations on phone 10, whose user is able to obtain the desired electronic money with the small amount of processing at the highest (optimum) exchange rate.

The above-described embodiments refer to a case wherein there are electronic money exchange servers 31, 32 capable of returning affirmative replies to the requests for confirming the currency that can be handled S111/ S121/ S131. However, it may be presumed that, in case the sort of electronic money to exchange or desired by exchange is no popular currency, no affirmative reply can be obtained. In such case, the targeted electronic money may, of course, be obtained by repeating the exchange processing by plural electronic money exchange servers.

Referring to Fig.3, as necessary, a third embodiment of the present invention is now explained, with matter already explained in connection with the first and second embodiments ing omitted.

In the first and second embodiments, it is assumed that the electronic money is convertible with the cash and is the subject of exchange. However, the case that most electronic money is exclusive and is used only for settlement in specified manufacturer/sale stores may be predicted. The present embodiment shows an example in which the invention may be applied even in such case.

In Fig.3, the sorts of the electronic money used are existing sorts of the electronic money, such as "yen", "dollar" and "euro". In the following explanation, the "currency A", "currency B" and the "currency C", available only in specified producers/sale stores, are to be substituted for "yen", "dollar" and "euro", respectively.

The servers 31, 32 and 33 make a response to an inquiry from the mobile phone 10 as to whether or not the "currency A", "currency B" and the "currency C" can be handled (exchanged), or as to the exchange rate. The exchange servers are capable of accepting a request for exchange between the "currency A", "currency B" and the "currency C".

In case the available amount of the electronic money in terms of the "currency A" is stored and held in area 51 of the mobile phone 10, the phone is able to make settlement solely in a settlement terminal accepting the settlement processing with the "currency A", but is unable to make settlement accepting the settlement processing only with the "currency B" or the "currency C". Even in such case, phone 10 is able to exchange the "currency A" it owns in its electronic money storage area 51 for the "currency B" or the "currency C" as in the above-described first and second embodiments to make the settlement processing, on the spot, even with a settlement terminal designed for accepting the settlement processing with only the "currency B" or the "currency C". That is, the user of phone 10 is able to use the electronic money stored in the electronic money storage area 51 of phone 10 efficaciously without having to store the electronic money purposelessly.

The meritorious effects of the invention are summarized as follows.
Settlement processing can be performed on the spot, by the electronic money exchange processing, even in case a settlement terminal is unable to accept the processing with the electronic money owned by the user. That is, even in circumstances where the sorts of the electronic money handled by settlement terminals provided all over the world are respectively different, a specified sort of the electronic money can be used efficaciously.
It should be noted that other objects, features and aspects of the invention will become apparent in the entire disclosure and that modifications may be done without departing from the gist and scope of the invention as disclosed herein and claimed as appended herewith.
Also it should be noted that any combination of the disclosed and/or claimed elements, matter and/or items may fall under the above modifications.

## Claims

1. An electronic money system comprising a settlement terminal for receiving and executing a request for settlement processing with at least one sort of electronic money, and a mobile terminal including electronic money storage means for storing and holding the amounts available of a plurality of various sorts of electronic money, said mobile terminal transmitting a request for settlement processing with electronic money in dependency upon said settlement terminal; said system further comprising
means for accepting an exchange rate inquiry processing from said mobile terminal to transmit an exchange rate between two or more sorts of electronic money, at least including said one sort, to said mobile terminal; and
means for updating, on accepting an exchange execute request including the information on the exchange amount with any one sort of electronic money before exchange or after exchange from said mobile terminal, the amount available of the various sorts of the electronic money in said electronic money storage means of said mobile terminal, based on said exchange rate and on said exchange execute request.

2. The electronic money system as defined in claim 1 wherein
a plurality of electronic money exchange servers are provided;
said mobile terminal performing inquiry processing for inquiring at each of said electronic money exchange servers as to whether or not one sort of the electronic money selected from the plural sorts of the electronic money stored and held in said electronic money storage means is exchangeable with another sort of the electronic money;
each of said electronic money exchange servers responding to said inquiry processing;
said mobile terminal executing said exchange rate inquiry processing to the electronic money exchange server which has made an affirmative reply to said inquiry processing.

3. The electronic money system as defined in claim 1 or 2 wherein
said various sorts of the electronic money includes at least the electronic money in terms of "yen" and the electronic money in terms of the foreign currency;
said electronic money exchange server(s) changing the exchange rate between the electronic money in terms of "yen" and the electronic money in terms of the foreign currency in dependency upon the exchange amount.

4. The electronic money system as defined in any one of claims 1 to 3 wherein
said one sort of electronic money is the electronic money proper to a network of said settlement terminal; and wherein
said electronic money exchange server(s) changes the exchange rate in dependency upon the sort of the electronic money exchanged and the exchange amount.

5. The electronic money system as defined in any one of claims 1 to 4 wherein
two or more of electronic money exchange servers with different exchange rates are provided; and wherein
said mobile terminal may select, based on said exchange rate, the electronic money exchange server to which said exchange execute request is transmitted.

6. An electronic money exchange server for exchange from one sort of electronic money to another in an electronic money system including a settlement terminal for receiving and executing a request for settlement processing with at least one sort of electronic money, and a mobile terminal including electronic money storage means for storing and holding a plurality of various sorts of electronic money, said mobile terminal transmitting a request for settlement processing with the electronic money in agreement with said settlement terminal; said electronic money exchange server comprising
means for transmitting an exchange rate between two or more sorts of electronic money, at least including said one sort of the electronic money, to said mobile terminal, in case exchange rate inquiry processing is performed from said mobile terminal; and
means for updating, on accepting an exchange execute request, including the information on the exchange amount by one sort of the electronic money before exchange or after exchange, from said mobile terminal, the amount available of the various sorts of the electronic money in said electronic money storage means of said mobile terminal, based on said exchange rate and on said exchange execute request.

7. The electronic money exchange server as defined in claim 6 wherein
said various sorts of electronic money at least include electronic money in terms of "yen" and electronic money in terms of foreign currency; and wherein
the exchange rate of the electronic money in terms of "yen" and the electronic money in terms of the foreign currency is changed in dependency upon the exchange amount.

8. The electronic money exchange server as defined in claim 6 or 7 wherein
said one sort of the electronic money is the electronic money proper to a network of the settlement terminal; and wherein
the exchange rate is changed in dependency upon the sort of the electronic money exchanged and the exchange amount.

9. A mobile terminal for use in the electronic money system as defined in claim 5 wherein
said exchange rate inquiry processing is carried out to each electronic money exchange server; and wherein
the electronic money exchange server with the highest exchange rate is selected; said exchange execute request being transmitted to the electronic money exchange server selected.

10. A mobile terminal for use in the electronic money system as defined in claim 5 wherein
inquiry processing is carried out for inquiring at each electronic money exchange server as to whether or not a sort of the electronic money selected from plural sorts of the electronic money stored and held in said electronic money storage means of said mobile terminal is the electronic money exchangeable with another sort of the electronic money scheduled to be exchanged;
the electronic money exchange server which has returned an affirmative reply to said inquiry processing is selected and the exchange rate inquiry processing is carried out to the electronic money exchange server selected; and wherein
the electronic money exchange server with the highest exchange rate is selected and the exchange execute request is transmitted to the electronic money exchange server selected.
